# EUROPÄISCHE PATENTSCHRIFT

(11) **EP 2 762 426 B1**
(45) Veröffentlichungstag und Bekanntmachung des Hinweises auf die Patenterteilung: **20.01.2016**
(21) Anmeldenummer: 14154026.0
(22) Anmeldetag: 05.02.2014
(51) Int. Cl.: B65G 29/02, B65G 47/248

(54) **Vorrichtung zum Wenden und Befördern eines Gegenstandes**
Device for turning and conveying an object
Dispositif pour retourner et transporter un objet

(30) Priorität: 05.02.2013 DE 102013101149
(43) Veröffentlichungstag der Anmeldung: 06.08.2014
(73) Patentinhaber: Windmöller & Hölscher KG, 49525 Lengerich (DE)
(72) Erfinder: Hawighorst, Thomas, 49205 Hasbergen (DE); Titz, Alexander, 33619 Bielefeld (DE); Tillmann, Guido, 48607 Ochtrup (DE); Duwendag, Rüdiger, 49525 Lengerich (DE)

(56) Entgegenhaltungen:
- EP-B1- 1 971 540
- DE-U1- 20 219 892
- GB-A- 1 305 270
- US-A- 3 251 523
- US-A- 3 710 955

## Beschreibung

Die Erfindung betrifft eine Vorrichtung zum Wenden eines Gegenstandes, insbesondere eines Paketes aus gestapelten Säcken.

Vorrichtungen zum Wenden von Gegenständen werden beim Transportieren und Palettieren von Paketen aus gestapelten Säcken verwendet. Dabei kommt es manchmal vor, dass die Säcke einander nicht flächig anliegen und die Pakete deswegen in der Mitte zusammensinken. Dies kann beispielsweise dann der Fall sein, wenn die Säcke an ihren Enden gefaltete Böden oder Ventile aufweisen. Um dennoch eine möglich ebene Fläche beim Palettieren von solchen Paketen zu erhalten, ist es daher manchmal notwendig, diese Pakete zu wenden.

Aus der DE 199 31 145 A1 ist eine Vorrichtung zum Wenden eines Gegenstandes bekannt, die mit einer Haltevorrichtung zum Aufnehmen, Wenden und Abgeben des Gegenstandes und einer Drehvorrichtung zum Wenden der Haltevorrichtung ausgeführt ist. Die Haltevorrichtung weist dabei zwei Transportelemente auf, die den Gegenstand einklemmen können, wobei die Transportelemente mittels der Drehvorrichtung gewendet werden können. Die Transportelemente können dabei durch einen ortsfesten Transportantrieb angetrieben werden und den Gegenstand nur dann transportieren, wenn sie auf einer Ebene mit einer Zuführ- und einer Weiterleitungsvorrichtung liegen. Um den Gegenstand einzuklemmen und zu wenden, werden die Transportelemente aus der Transportebene herausgehoben und erst dann gedreht. Dabei hat sich als Nachteil herausgestellt, dass der Transport des Gegenstandes verzögert wird. Außerdem erfordert der ortsfeste Transportantrieb zum Antreiben der Transportelemente eine komplizierte Lagerung, um die Bewegung der Transportelemente auf den Transportantrieb abzufedern. Ferner sind weitere komplizierte Bauteile erforderlich, um eine lösbare Verbindung zwischen den Transportelementen und dem Transportantrieb, meistens durch eine Reibverbindung zu erhalten.

Die US 3 710 955 A beschreibt eine Vorrichtung zum Wenden einer Matratze mit einer Haltevorrichtung zum Aufnehmen, Wenden und Abgeben der Matratze sowie einen Transportantrieb zum Befördern der Matratze. Nachteilhafterweise ist der Antrieb umständlich an den Transportelementen befestigt.

Der Erfindung liegt daher die Aufgabe zugrunde, eine verbesserte Vorrichtung zum Wenden eines Gegenstandes, insbesondere eines Paketes aus gestapelten Säcken bereitzustellen, die die oben genannten Nachteile überwindet. Insbesondere ist es die Aufgabe der Erfindung, eine Vorrichtung zum Wenden eines Gegenstandes zu schaffen, die ein schnelleres Transportieren des Gegenstandes ermöglicht und einen einfachen Aufbau aufweist. Die Aufgabe der vorliegenden Erfindung wird durch sämtliche Merkmale des Patentanspruches 1 gelöst. In den abhängigen Patentansprüchen sind mögliche Ausgestaltungen der Erfindung beschrieben.

Die Erfindung sieht eine Vorrichtung zum Wenden eines Gegenstandes, insbesondere eines Paketes aus gestapelten Säcken vor, die mit einer Haltevorrichtung zum Aufnehmen, Wenden und Abgeben des Gegenstandes, die zwei höhenverstellbaren Transportelemente zum Befördern des Gegenstandes und zumindest einen Transportantrieb zum Antreiben der Transportelemente aufweist, und einer Drehvorrichtung zum Drehen der Transportelemente um eine ortsfeste Drehachse ausgeführt ist, die ein drehbares Gestell zum beidseitigen Befestigen der Transportelemente aufweist, wobei die Transportelemente bewegbar am Gestell befestigt sind, und wobei der Transportantrieb drehfest am Gestell befestigt ist.

Der Erfindungsgedanke liegt dabei darin, dass der Transportantrieb mit dem Gestell und somit mit den Transportelementen mitbewegbar sein kann, sodass beim Wenden des Gestells, die Transportelemente weiter angetrieben werden können und der Gegenstand weiter in eine Transportrichtung bewegt werden kann. Damit kann sichergestellt werden, dass der Transport des Gegenstandes während des Wendens nicht unterbricht. Somit kann die Transportgeschwindigkeit erhöht und die Leistung der Vorrichtung verbessert werden. Insbesondere in modernen Betrieben mit einer dauerhaften Produktion, Beförderung und Palettierung von gestapelten Säcken ist es von erheblichem Vorteil, eine hohe Leistung zu gewährleisten, um den immer höheren Standarden zu entsprechen und eine gewinnbringende Produktionsgeschwindigkeit sicherzustellen. Da der Transportantrieb mitgedreht werden kann, muss die Wirkverbindung zwischen dem Transportantrieb und den Transportelementen nicht unterbrochen werden. Daher ergibt sich der Vorteil, dass der Transportantrieb starr am Gestell befestigt werden kann, da der Bedarf entfällt, die Bewegung der Transportelemente zum Transportantrieb abzufedern. Die Wirkverbindung zwischen dem Transportantrieb und den Transportelementen kann vorteilhafterweise während des Wendens und des Transportierens des Gegenstandes aufrechterhalten werden. Deswegen kann die Wirkverbindung auf eine einfache Weise und einfache Bauteile wie Zahnriemen und Drehräder bzw. Rollen hergestellt werden.

Die Erfindung geht weiterhin von dem Gedanken aus, dass der Transportantrieb für jedes Transportelement eine eigene Antriebseinheit aufweisen kann. Dadurch kann der Vorteil erreicht werden, dass beide Transportelemente ungeachtet der Drehposition zum Transportieren des Gegenstandes ausgelegt sein können. Da beide Transportelemente am Transport des Gegenstandes teilnehmen können, kann die Transportgeschwindigkeit erhöht werden, wobei gleichzeitig die erforderliche Antriebsleistung für den Transport reduziert werden kann. Außerdem ist es von Vorteil, dass die Antriebseinheiten kleiner und leichter ausgeführt werden können.

Vorteilhafterweise können die Transportelemente mit einem Verstellmechanismus miteinander verbunden und/oder in eine Klemmrichtung aufeinander bewegt werden, um den Gegenstand zum Wenden einzuklemmen. Erfindungsgemäß kann der Verstellmechanismus einen Pneumatikzylinder aufweisen, wobei insbesondere der Pneumatikzylinder Schnellentlüftungsventile aufweisen kann. Pneumatische Antriebe erlauben vorteilhafterweise hohe Arbeitsgeschwindigkeiten, wobei gleichzeitig ein elastisches und nachgiebiges Antriebsverhalten erzielt werden kann. Der erfindungsgemäße Verstellmechanismus ist daher besonders geeignet, an bewegten Objekten angeordnet zu werden, sodass der Verstellmechanismus direkt an den Transportelementen befestigt werden kann. Weiterhin kann es von Vorteil sein, dass durch den erfindungsgemäßen Verstellmechanismus Gegenstände unterschiedlicher Größen und Höhen zuverlässig aufgenommen werden können. Die Druckluftzufuhr kann vorteilhafterweise durch einen flexiblen Schlauch bereitgestellt werden, welcher beispielsweise durch die Drehachse der Vorrichtung zum Pneumatikzylinder geführt werden kann.

Die Erfindung kann weiterhin vorsehen, dass die Drehvorrichtung einen Stoßdämpfer aufweisen kann, um die Bewegung der Transportelemente aufeinander zu dämpfen, und dass insbesondere der Stoßdämpfer drehfest am Gestell befestigt sein kann. Insbesondere in modernen Vorrichtungen, die hohe Transport- und Drehgeschwindigkeiten aufweisen, können die Stoßdämpfer den Gegenstand vor dem zu starken Aufeinanderstoßen mit den Transportelementen schützen. Die Stoßdämpfer können dabei mit dem Gestell und somit mit den Transportelementen mitbewegt werden, sodass in jeder Drehposition der Transportelemente der Gegenstand zuverlässig und dennoch gedämpft eingeklemmt werden kann.

Erfindungsgemäß können die Transportelemente in Form von Rollenbahnen ausgebildet sein. Ferner ist es denkbar, dass jedes Transportelement mindestens zwei Transportrollen aufweisen kann, welche mittels eines Verbindungsriemens, insbesondere eines Flach-, Zahn- oder Keilrippenriemens miteinander in Wirkverbindung stehen können. Vorteilhafterweise können Rollenbahnen flexibel ausgebildet werden und den räumlichen Vorgaben sowie der Größe des Gegenstandes angepasst werden. Außerdem ist es vorteilhaft, dass derartige Transportelemente an das Gewicht des zu transportierenden Gegenstandes angepasst werden können. Dabei können die Rollen aus unterschiedlichen Materialien wie Stahl oder Kunststoff in Abhängigkeit von dem Gewicht des zu transportierenden Gegenstandes ausgebildet werden. Auch kann die Aufnahme und die Transportfähigkeit der Rollenbahnen durch verschiedene Breiten der Transportrollen eingestellt werden. Zum Antrieb der Transportrollen, die jeweils in Paaren mittels eines Verbindungsriemens verbunden sein können, kann die Verbindung zum Transportantrieb vorteilhafterweise nur an einer der Transportrollen hergestellt werden. Wird nur eine Transportrolle in Bewegung versetzt, werden alle anderen Transportrollen automatisch mitbewegt, da die Bewegung über die Verbindungsriemen übertragen wird. Alternativ ist es denkbar, dass die Transportrollen über ein Getriebe mit dem Transportantrieb verbunden werden können, welches einen Flachriemen und ein Antriebsrad mit entsprechendem Reibbelag aufweisen kann. Alternativ können die Transportelemente in Form einer Förderbahn mit einem Förderband und zwei Umlenkrollen ausgebildet sein. Dabei kann der Transportantrieb an einer der Umlenkrollen angreifen. Alternativ oder zusätzlich kann vorgesehen sein, dass der Transportantrieb in einer der Transport- bzw. Umlenkrollen angeordnet werden kann.

Die Transportelemente können vorteilhafterweise beidseitig Befestigungselemente aufweisen, die die Transportrollen umschließen und zum Befestigen der Transportelemente am Gestell dienen. So können die Transportelemente mit den Transportrollen als ein gemeinsames Bauteil ausgebildet sein. Dadurch kann die Befestigung der Transportrollen am Gestell vereinfacht werden, wobei die Befestigungselemente am Gestell verschiebbar gelagert werden können.

Ferner sieht die Erfindung vor, dass der Drehantrieb einen Motor, insbesondere einen Trommelmotor aufweisen kann. Dabei kann das Gestell zwei Drehscheiben aufweisen, um die Transportelemente beidseitig zu umschließen. Der Trommelantrieb kann dabei die Antriebswirkung des Motors über einen Flach-, Zahn- oder Keilriemen an das Gestell übertragen. Der Trommelantrieb kann vorteilhafterweise schwere Gegenstände mit einer hohen Übersetzungskraft in Bewegung setzen und ein hohes Drehmoment erzeugen. Somit kann die Vorrichtung eine verbesserte Drehgeschwindigkeit des Gegenstandes bereitstellen und eine schnelle Beförderung des Gegenstandes ermöglichen.

Jede Drehscheibe kann erfindungsgemäß eine Führungsschiene aufweisen, die mit Gleitelementen zusammenwirken kann, die beidseitig an den Transportelementen angeordnet sein können. Vorteilhafterweise können die Führungsschienen dazu dienen, die Transportelemente an den Drehscheiben zu befestigen, und andererseits die Transportelemente aufeinander bewegbar an den Drehscheiben zu lagern. Dann können die Transportelemente nicht nur mit den Drehscheiben gedreht werden sondern gleichzeitig auf- und voneinander bewegt werden, um den Gegenstand zum Wenden einzuklemmen und zum weiteren Transport freizugeben.

Erfindungsgemäß kann die Antriebseinheit ein Antriebsrad, das durch einen Antriebsmotor angetrieben werden kann, und ein Umlenkrad aufweisen, um die Wirkung des Antriebsmotors auf das Transportelement mittels eines Übertragungsrades zu übertragen. Der Erfindungsgedanke liegt dabei darin, dass die Antriebseinheit gelenkig ausgebildet sein kann. So kann der Motor starr am Gestell befestig sein und über das Umlenkrad und das Übertragungsrad die am Gestell bewegbaren Transportelemente antreiben. Vorteilhafterweise kann damit sichergestellt werden, dass während der Klemmbewegung sowie während des Drehens der Gegenstand weiter in die Transportrichtung bewegt werden kann. Die Beförderungsgeschwindigkeit der erfindungsgemäßen Vorrichtung wird dabei erheblich verbessert.

Das Antriebsrad kann dabei drehfest am Gestell befestigt sein, wobei das Übertragungsrad am Transportelement befestigt und mit dem Transportelement bewegbar sein kann, und wobei das Umlenkrad zumindest zum Teil mit dem Transportelement mitbewegbar sein kann. Das Umlenkrad kann vorteilhafterweise frei bewegbar sein und nur mit dem Antriebsrad und dem Übertragungsrad in mechanischer Wirkverbindung stehen. Das Antriebsrad, das Umlenkrad und das Übertragungsrad bilden dabei eine Art Scherenanordnung mit zwei Schenkeln zwischen dem Antriebsrad und dem Umlenkrad und zwischen dem Umlenkrad und dem Übertragungsrad mit dem Scheitelpunkt im Umlenkrad. Die Antriebsbewegung wird dabei vom Antriebsrad zum Umlenkrad und vom Umlenkrad zum Übertragungsrad übertragen, wobei das Übertragungsrad mit den Transportelementen zum Einklemmen des Gegenstandes mitbewegt werden kann, und wobei die Antriebsbewegung dennoch weiterhin an die Transportelemente übertragen werden kann. Vorteilhafterweise kann somit ermöglicht werden, dass die Transportelemente in jeder Position an der Führungsschiene in Wirkverbindung mit dem Transportantrieb stehen und den Gegenstand weiter in die Transportrichtung befördern.

Des Weiteren kann vorteilhaft sein, dass das Übertragungsrad ein Teil des Transportelementes, insbesondere eine Transportrolle ist. Erfindungsgemäß kann jede Transportrolle die Drehbewegung an eine benachbarte Transportrolle mittels der Verbindungselemente übertragen. So kann die Antriebseinheit die jeweilige Rollenbahn in Bewegung setzen, um den Gegenstand zu transportieren. Dabei ist es vorteilhaft, dass eine Transportrolle als Teil des Transportantriebes dienen kann. Somit kann die Anzahl der Getriebeelemente, insbesondere im Vergleich zu einem Reibradantrieb reduziert werden, wobei die Verbindung zwischen dem Transportantrieb und dem entsprechenden Transportelement vereinfacht werden kann.

Gemäß der vorliegenden Erfindung kann das Antriebsrad mittels eines ersten Antriebsriemens mit dem Umlenkrad und/oder das Umlenkrad mittels eines zweiten Antriebsriemens mit dem Übertragungsrad in Wirkverbindung stehen, wobei insbesondere der erste und/oder der zweite Antriebsriemen in Form eines Flach-, Zahn- oder Keilrippenriemens ausgebildet sein können/kann. Die Verbindung zum Antriebsmotor kann somit auf eine einfache Weise hergestellt und aufrechterhalten werden, da die Antriebsriemen permanent an den Rädern anliegen können. Vorteilhafterweise kann durch die Antriebsriemen die Wirkung die Antriebseinheit unabhängig von der Position der Transportelemente am Gestell an die Transportrollen übertragen werden.

Vorteilhafterweise kann ein Schleifring an der Drehachse vorgesehen sein, um den Transportantrieb, insbesondere den Antriebsmotor zu speisen.

Nach einem besonderen Vorteil der Erfindung kann der Drehantrieb das Gestell beidseitig antreiben, wobei insbesondere der Drehantrieb zwei Getriebeelemente aufweisen kann, die um eine Drehwelle drehbar sind, um beide Drehscheiben anzutreiben. Im Gegensatz zu einem einseitigen Drehantrieb ist es besonders vorteilhaft, dass die Drehscheiben gleichzeitig durch nur einen Drehantrieb mittels der zwei Getriebeelemente angetrieben werden können. Dabei kann die Drehgeschwindigkeit des Gestells bei gleicher Drehantriebsleistung erhöht werden. Die Drehvorrichtung benötigt dabei keine schweren Verbindungselemente mehr, um die Drehscheiben zu verbinden und um die Rotationsbewegung von der antriebsseitigen Drehscheibe an die zweite Drehscheibe zu übertragen, welche dem Drehantrieb abgewandt ist. Die Transportelemente können daher zuverlässig am Gestell befestigt und in den Führungsschienen gelagert werden, wobei gleichzeitig eine hohe Drehgeschwindigkeit der Haltevorrichtung gewährleistet werden kann.

Erfindungsgemäß kann der Drehantrieb zwei Übertragungselemente, insbesondere zwei Flach-, Zahn-, oder Keilrippenriemen aufweisen, um die Wirkung der Getriebeelemente auf die Drehscheiben zu übertragen. Die Übertragungselemente sorgen vorteilhafterweise dazu, dass die Wirkung des Drehantriebes gleich an beiden Drehscheiben übertragen werden kann. Im Gegensatz zu einem einseitigen Drehantrieb kann die Vorrichtung stabiler und dennoch leichter ausgebildet werden, wobei der Energieverbrauch zum Wenden des Gegenstandes bei steigender Drehgeschwindigkeit reduziert werden kann.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele im Einzelnen beschrieben sind. Es zeigen:
- Fig. 1: eine schematische Darstellung einer herkömmlichen Vorrichtung zum Wenden eines Gegenstandes,
- Fig. 2: eine schematische Darstellung einer erfindungsgemäßen Vorrichtung zum Wenden eines Gegenstandes,
- Fig. 3: eine schematische Darstellung eines erfindungsgemäßen Verstellmechanismus,
- Fig. 4: eine schematische Darstellung erfindungsgemäßer Stoßdämpfer,
- Fig. 5: eine schematische Darstellung eines erfindungsgemäßen Schleifringes,
- Fig. 6: eine schematische Darstellung eines erfindungsgemäßen Transportelementes,
- Fig. 7: eine perspektivische Darstellung der herkömmlichen Vorrichtung zum Wenden eines Gegenstandes, und
- Fig. 8: eine perspektivische Darstellung der erfindungsgemäßen Vorrichtung zum Wenden eines Gegenstandes.

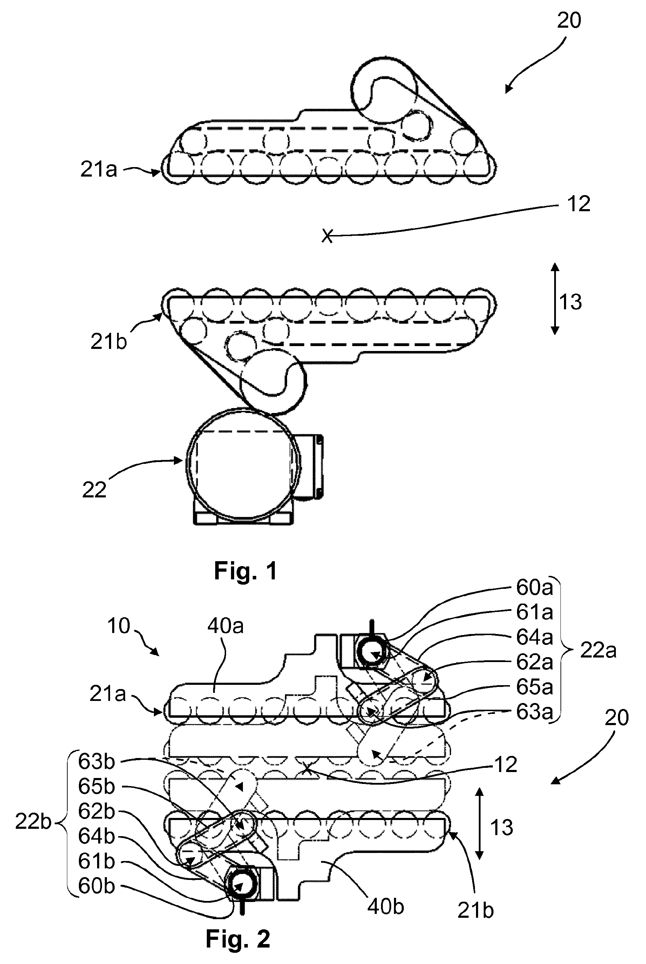

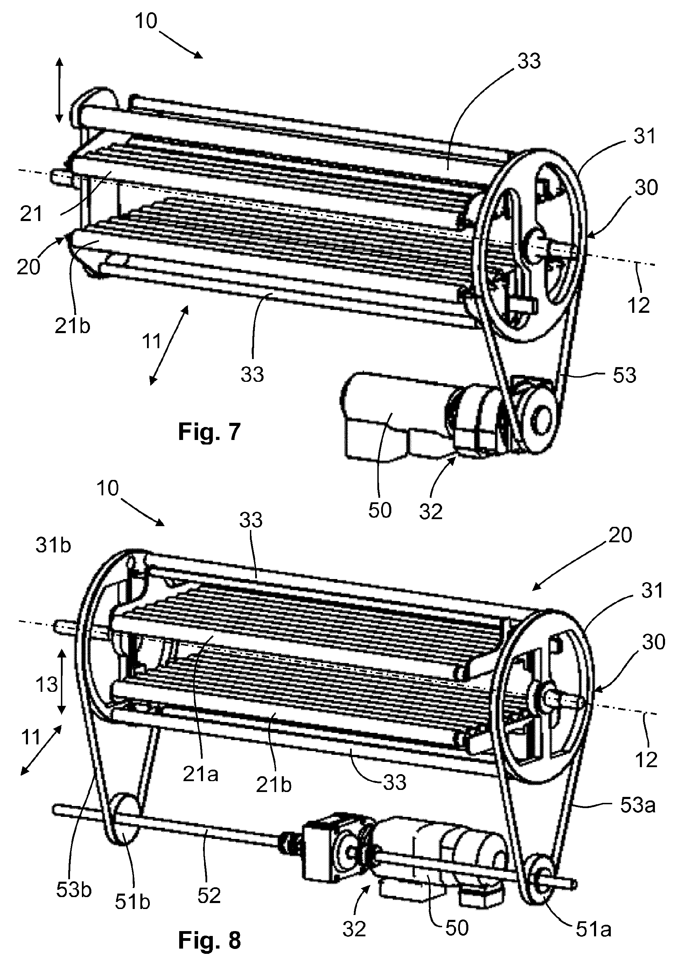

Die Figur 1 zeigt eine Vorrichtung zum Wenden eines Gegenstandes, wie sie aus dem Stand der Technik bekannt ist, und die Figur 2 die erfindungsgemäße Vorrichtung 10, wobei nachfolgend auf die Vorrichtungen und deren Unterschiede im Detail eingegangen wird. Die herkömmliche Vorrichtung umfasst ähnlich wie die erfindungsgemäße Vorrichtung 10 eine Haltevorrichtung 20 zum Aufnehmen, Wenden und Abgeben des Gegenstandes, die zwei höhenverstellbare 13 Transportelemente 21a, 21b zum Befördern des Gegenstandes und einen Transportantrieb 22 zum Antreiben der Transportelemente 21 a, 21 b aufweist, und eine Drehvorrichtung 30 zum Drehen der Transportelemente 21a, 21b um eine ortsfeste Drehachse 12, die näher anhand der Figuren 7 und 8 beschrieben wird.

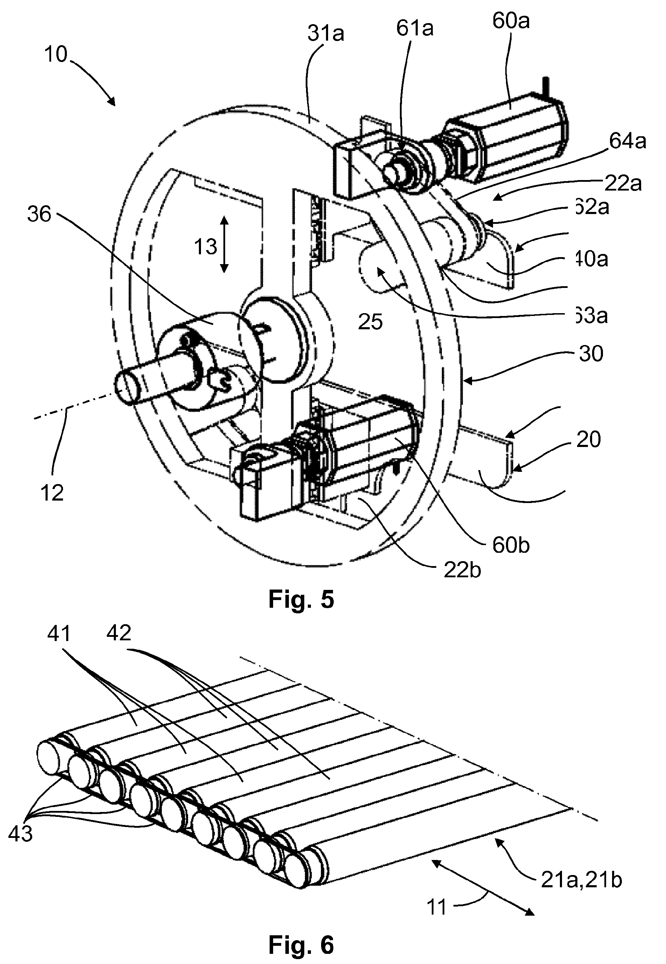

Die Erfindung betrifft den neuen Transportantrieb 22, wie gezeigt in der Figur 2, der im Gegensatz zum herkömmlichen Transportantrieb 22 der Figur 1 mit einem Gestell 31 der Drehvorrichtung 30, die in den Figuren 7 und 8 gezeigt ist, und somit mit den Transportelementen 21a, 21 b bewegbar ist. Der Erfindungsgedanke liegt dabei darin, dass beim Wenden der Transportelemente 21a, 21 b sie weiter angetrieben werden können und der Gegenstand weiter in eine Transportrichtung 11 bewegen können, die in der Figur 6 gezeigt ist. Der Vorteil der Erfindung liegt dabei darin, dass der Transport des Gegenstandes auch während des Wendens der Transportelemente 21 a, 21 b nicht unterbrochen wird.

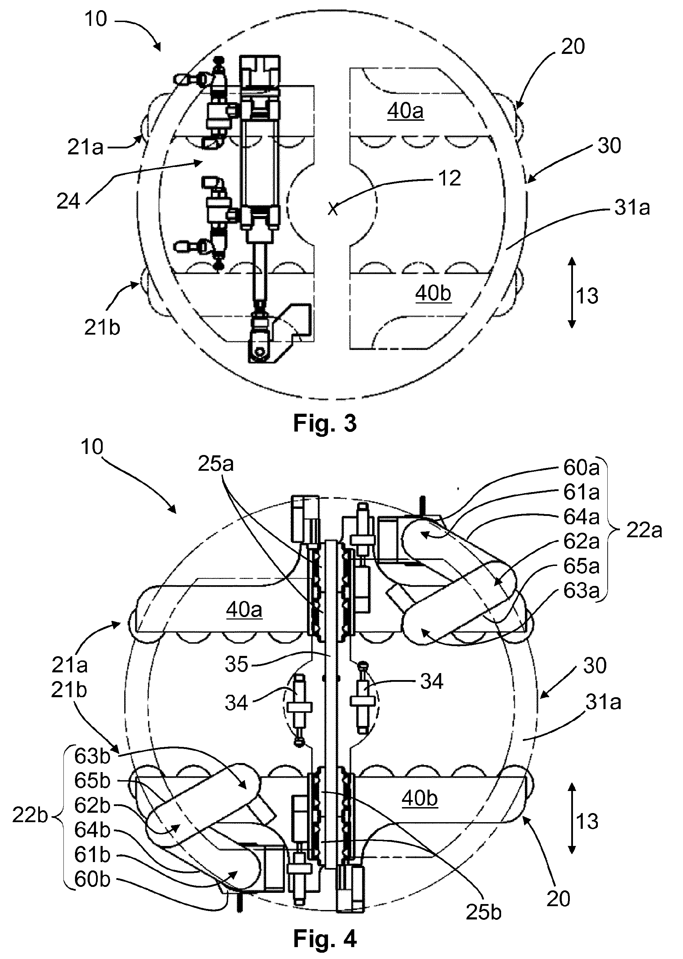

Der erfindungsgemäße Transportantrieb 22 ist starr am Gestell 31 befestigt, wie gezeigt in den Figuren 4 und 5. Im Gegensatz dazu ist der Transportantrieb 22 der herkömmlichen Vorrichtung der Figur 1 ortsfest an einem nicht dargestellten Gehäuse der Vorrichtung angeordnet. Bei der Vorrichtung der Figur 1 werden nur die Transportelemente 21 a, 21 b in eine vertikale Richtung 13 aufeinander bewegt, um den Gegenstand einzuklemmen. Dabei muss der herkömmliche Transportantrieb 22 beim Bewegen der Transportelemente 21 a, 21 b wieder auseinander, die Bewegung der Transportelemente 21 a, 21 b zum Transportantrieb 22 zumindest zum Teil abfedern, bis die Wirkverbindung zwischen den Transportelementen 21 a, 21 b und dem Transportantrieb 22 hergestellt ist. Um dies zu erreichen, wird der ortsfeste Transportantrieb 22 normalerweise federnd am Gehäuse der Vorrichtung gelagert. Im Gegensatz zum Stand der Technik kann der erfindungsgemäße Transportantrieb 22 fest an der Drehvorrichtung 30 befestigt sein (s. Figuren 3 und 4), da die Wirkverbindung zwischen dem erfindungsgemäßen Transportantrieb 22 und den Transportelementen 21a, 21 b auch während des Wendens nicht unterbricht. Die Wirkübertragung vom herkömmlichen Transportantrieb 22 auf die Transportelemente 21 a, 21 b wird mittels eines Antriebsrades mit einem speziellen Reibbelag und einem korrespondierenden Flachriemen auf der Seite der Transportelemente 21 a, 21 b hergestellt, der mittels eines Radgetriebes die Transportelemente 21a, 21b in Bewegung setzt. Im Gegensatz dazu kann die Wirkverbindung zwischen dem erfindungsgemäßen Transportantrieb 22 und den Transportelementen 21 a, 21 b auf eine einfache Weise und mittels einfacher sowie weniger Bauteile wie Flach-, Zahn- oder Keilrippenriemen 64, 65 hergestellt werden und während des Transportierens und Wendens des Gegenstandes aufrechterhalten bleiben.

Die Figur 2 zeigt ein Ausführungsbeispiel der Erfindung, bei dem der erfindungsgemäße Transportantrieb 22 für jedes Transportelement 21 a, 21 b eine eigene Antriebseinheit 22a, 22b aufweist. Gemäß dem Ausführungsbeispiel dienen die zwei Antriebseinheiten 22a, 22b dazu, dass beide Transportelemente 21a, 21b ungeachtet deren Drehposition den Gegenstand weiter transportieren können. Dadurch kann die Transportgeschwindigkeit erheblich erhöht werden, wobei gleichzeitig die erforderliche Leistung der Antriebseinheiten 22a, 22b reduziert werden kann. Deswegen können kleinere und leichtere Antriebseinheiten 22a, 22b verwendet werden.

Die Figur 3 zeigt einen Verstellmechanismus 24, der dazu dient, die Transportelemente 21a, 21b miteinander zu verbinden und in einer vertikalen Klemmrichtung 13 aufeinander zu bewegen, um den Gegenstand zum Wenden einzuklemmen. Der erfindungsgemäße Verstellmechanismus 24 ist als ein Pneumatikzylinder 24 ausgebildet. Der Pneumatikzylinder 24 weist dabei Schnellentlüftungsventile auf, um die Transportelemente 21a, 21b schnell zu bewegen und dennoch ein elastisches und nachgiebiges Einklemmen des Gegenstandes zu erzielen. Der Verstellmechanismus 24 ist gemäß der Erfindung direkt an den Transportelementen 21 a, 21b befestigt. Die Druckluftzufuhr kann vorteilhafterweise durch einen flexiblen Schlauch bereitgestellt werden, der beispielsweise durch die ortsfeste Drehachse 12 zum Verstellmechanismus 24 geführt werden kann. In der Figur 4 sind Stoßdämpfer 34 gezeigt, die dazu dienen, die Bewegung der Transportelemente 21a, 21b aufeinander zu dämpfen und den Gegenstand bei Einklemmen 21a, 21b vor mechanischen Einwirkungen durch die Transportelemente 21a, 21b zu schützen. Die Stoßdämpfer 34 sind im dargestellten Ausführungsbeispiel drehfest an der Drehvorrichtung 30 befestigt, wobei während des Wendens die Stoßdämpfer 34 mit den Transportelementen 21a, 21 b mitbewegt werden. Die Figur 5 zeigt eine weitere vorteilhafte Ausführungsform der Erfindung mit einem Schleifring 36, der an der Drehachse 12 angeordnet ist, um die Antriebsmotoren 60a, 60b der drehbaren Antriebseinheiten 22a, 22b mit Energie zu versorgen.

Die Figur 6 zeigt ein Ausführungsbeispiel der erfindungsgemäßen Transportelemente 21a, 21b, die in Form von Rollenbahnen ausgebildet sind. Die Rollenbahn umfasst mehrere Transportrollen 41, 42, wobei die Anzahl von Transportrollen 41, 42 sowie deren Größe und Gewicht an die Maße des Gegenstandes angepasst werden können. Die Transportrollen 41, 42 können erfindungsgemäß aus verschiedenen Materialien wie Stahl oder Kunststoff ausgebildet sein, je nachdem wie schwer und groß der zu transportierende Gegenstand ist. Jede zwei benachbarten Transportrollen 41, 42 sind mit jeweils einem Verbindungsriemen 43, insbesondere drehfest miteinander verbunden, um die Drehbewegung von einer Transportrolle 41, 42 zur der anderen zu übertragen. Der Verbindungsriemen 43 kann beispielsweise als ein Flach-, Zahn- oder Keilrippenriemen ausgebildet sein. Gemäß der Erfindung wird nur eine der Transportrollen 41, 42 in Bewegung gesetzt (s. Figuren 2 und 4), durch die Verbindungsriemen 43 wird die Drehbewegung auf alle anderen Transportrollen 41, 42 übertragen.

Die Transportelemente 21a, 21b sind, wie gezeigt in den Figuren 2 bis 5, von beiden Endseiten drehbar an Befestigungselementen 40a, 40b angeordnet, die die Transportrollen 41, 42 umschließen und außerdem zum Befestigen der Transportelemente 21 a, 21 b an der Drehvorrichtung 30 dienen. Die Figur 4 zeigt, dass die Befestigungselemente 40a, 40b dabei am Gestell 31 der Drehvorrichtung 30 verschiebbar entlang einer Führungsschiene 35 gelagert sind. Das Gestell 31 der Drehvorrichtung 30 weist zwei Drehscheiben 31 a, 31 b auf, die ausführlicher in Figur 8 gezeigt sind. Jede der Drehscheiben 31 a, 31 b ist dabei mit einer Führungsschiene 35 ausgebildet, um die Transportelemente 21 a, 21 b von beiden Endseiten verschiebbar zu lagern. Jede Führungsschiene 35 wirkt erfindungsgemäß mit Gleitelementen 25a, 25b zusammen, die an den Befestigungselementen 40a, 40b der Transportelemente 21 a, 21 b angeordnet sind. Erfindungsgemäß werden die Transportelemente 21 a, 21 b nicht nur mit den Drehscheiben 31 a, 31 b mitgedreht sondern gleichzeitig auf- und voneinander entlang des Pfeils 13 bewegt, um den Gegenstand zum Wenden einzuklemmen und zum weiteren Transport freizugeben.

Die erfindungsgemäßen Antriebseinheiten 22a, 22b weisen jeweils ein Antriebsrad 61 a, 61 b, das durch jeweils einen Antriebsmotor 60a, 60b angetrieben wird, und ein Umlenkrad 62a, 62b auf, um die Wirkung des Antriebsmotors 60a, 60b auf das entsprechende Transportelement 21 a, 21 b über ein Übertragungsrad 63a, 63b zu übertragen. Die Antriebseinheiten 22a, 22b sind erfindungsgemäß gelenkig mit einem Gelenk im Umlenkrad 62a, 62b ausgebildet. Der Antriebsmotor 60a, 60b ist starr am Gestell 31 befestig, wobei durch die gelenkigen Antriebseinheiten 22a, 22b die Antriebswirkung an Transportelemente 21a, 21b übertragen wird, die bewegbar am Gestell 31 angeordnet sind. Dadurch wird erreicht, dass während der Klemmbewegung sowie während des Drehens der Gegenstand weiter in die Transportrichtung 11 bewegt wird.

Das Antriebsrad 61 a, 61 b ist dabei drehfest an der entsprechenden Drehscheibe 31 a, 31 b befestigt. Dagegen ist das Übertragungsrad 63a, 63b am Transportelement 21 a, 21 b befestigt und mit dem Transportelement 21 a, 21 b bewegbar. Dabei wird das Umlenkrad 62a, 62b zumindest zum Teil mit dem Transportelement 21a, 21b mitgezogen. Das Umlenkrad 62a, 62b ist erfindungsgemäß frei beweglich und steht nur mit dem Antriebsrad 61 a, 61 b und dem Übertragungsrad 63a, 63b in mechanischer Wirkverbindung. Das Antriebsrad 61 a, 61 b, das Umlenkrad 62a, 62b und das Übertragungsrad 63a, 63b bilden dabei eine Art Gelenkanordnung mit zwei Schenkeln zwischen dem Antriebsrad 61a, 61b und dem Umlenkrad 62a, 62b sowie zwischen dem Umlenkrad 62a, 62b und dem Übertragungsrad 63a, 63b mit dem Gelenk im Umlenkrad 62a, 62b. Die Antriebseinheiten 22a, 22b werden im Gelenk am Umlenkrad 62a, 62b beim Bewegen der Transportelemente 21a, 21b zu- und voneinander geöffnet bzw. geschlossen. Die Antriebswirkung wird dabei dennoch zuverlässig vom Antriebsrad 61a, 61b zum Umlenkrad 62a, 62b und vom Umlenkrad 62a, 62b zum Übertragungsrad 63a, 63b übertragen. Damit wird erreicht, dass die Transportelemente 21 a, 21 b in jeder Position an der Führungsschiene 35 in Wirkverbindung mit dem entsprechenden Transportantrieb 60a, 60b stehen und die Transportrollen 41, 42 den Gegenstand transportieren.

Erfindungsgemäß kann das Übertragungsrad 63a, 63b direkt an einer Transportrolle 41, 42 eingreifen. Diese Transportrolle 41, 42 überträgt dann die Drehbewegung an eine benachbarte Transportrolle 41, 42 mittels des Verbindungselementes 43 weiter und setzt so die jeweilige Rollenbahn in Bewegung. Somit dient eine der Transportrollen 41, 42 als Teil der Antriebseinheit 22a, 22b. Im Gegensatz zur herkömmlichen Vorrichtung der Figur 1 erfordert die erfindungsgemäße Vorrichtung 10 weniger Bauteile und Getriebeelemente, was anhand der Figuren 1 und 2 ersichtlich ist.

Jedes erfindungsgemäße Antriebsrad 61a, 61b, wie gezeigt in den Figuren 2, 4 und 5 ist mittels eines ersten Antriebsriemens 64a, 64b mit dem Umlenkrad 62a, 62b und das Umlenkrad 62a, 62b mittels eines zweiten Antriebsriemens 65a, 65b mit dem Übertragungsrad 63a, 63b verbunden. Der erste und der zweite Antriebsriemen 64, 65 können beispielsweise in Form eines Flach-, Zahn- oder Keilrippenriemens ausgebildet sein. Die Antriebsriemen 64, 65 bleiben permanent an den Rädern 62, 63, 64 anliegen und halten die mechanische Wirkverbindung vom Antriebsmotor 60a, 60b zu den Transportelementen 21a, 21b während des ganzen Prozesses und unabhängig von der Position der Transportelemente 21a, 21b am Gestell 31 aufrecht. Da die Transportelemente 21a, 21b auch während des Wendens angetrieben werden, kann die Transportgeschwindigkeit des Gegenstandes erheblich erhöht und die Leistung der Vorrichtung verbessert werden. Hierzu sieht die Erfindung vor, dass die Antriebseinheiten 22a, 22b während des Wendens mit den Transportelementen 21a, 21b mitgedreht werden.

Die Figuren 7 und 8 zeigen jeweils eine herkömmliche 32 und eine erfindungsgemäße Drehvorrichtung 30. Beide Vorrichtungen weisen einen Drehantrieb 32 mit einem Motor 50 auf, der als ein Trommelmotor ausgebildet ist. Der herkömmliche Drehantrieb 32 der Figur 7 wirkt nur einseitig auf die Haltevorrichtung 20 ein, wobei die Drehvorrichtung 30 der Figur 7 nur eine Drehscheibe 31 und nur ein Übertragungselement 53 aufweist, um die Antriebswirkung des Motors 50 lediglich von einer Seite an die Haltevorrichtung 20 zu übertragen. Dagegen ist die erfindungsgemäße Drehvorrichtung 30 mit einem drehbaren Gestell 31 ausgebildet, das zwei Drehscheiben 31a, 31b aufweist, um die Haltevorrichtung 20 von zwei Seiten zu umschließen. Der besondere Vorteil der Erfindung besteht dabei darin, dass der erfindungsgemäße Drehantrieb 32 das Gestell 31 beidseitig antreibt. Der erfindungsgemäße Drehantrieb 32, der in Figur 8 gezeigt ist, greift dabei das Gestell 31 an zwei Drehscheiben 31a, 31b ein, die die Transportelemente 21a, 21b beidseitig umschließen. Hierzu weist der Drehantrieb 32 zwei Getriebeelemente 51 a, 51 b auf, die um eine Drehwelle 52 drehbar gelagert sind, die sich parallel zur Drehachse 12 der Transportelemente 21a, 21 b erstreckt. Die Drehwelle 52 wird durch den Motor 50 angetrieben und überträgt die Drehbewegung an die beiden Getriebeelemente 51 a, 51 b. Die Getriebeelemente 51 a, 51 b sind wiederum mit den beiden Drehscheiben 31 a, 31 b verbunden und treiben diese über zwei Übertragungselemente 53a, 53b, beispielsweise in Form von Flach, Zahn- oder Keilrippenriemen um die Drehachse 12 an. Gegenüber dem herkömmlichen einseitigen Drehantrieb 32 der Figur 7 ist es besonders vorteilhaft, dass beide Drehscheiben 31 a, 31 b aktiv durch nur den Drehantrieb 32 angetrieben werden, um die Drehbewegung gleichmäßig auf die Haltevorrichtung 20 zu übertragen. Somit kann die Drehung der Transportelemente 21a, 21 b bei gleicher Leistung stabilisiert werden. Dabei können die Transportelemente 21 a, 21 b bei größerer Drehgeschwindigkeit zuverlässiger an den Drehscheiben 31a, 31b gehalten werden als in der Vorrichtung der Figur 7. Die herkömmliche Drehvorrichtung der Figur 7 benötigt schwere Verbindungselemente 33, um die Drehbewegung von nur einer Seite an die dem Drehantrieb abgewandte Seite der Transportelemente 21a, 21b zu übertragen. Außerdem besteht bei der herkömmlichen Vorrichtung der Figur 7 die Gefahr, dass die Transportelemente 21a, 21 b aus den Verbindungsstellen mit dem Gestell 30, die dem Antrieb abgewandt sind, aufgrund ihrer Trägheit ausschlagen können. Die erfindungsgemäße Vorrichtung 10 der Figur 8 benötigt dagegen keine torsionssteifen Verbindungselemente 33, da die Drehbewegung von zwei Seiten an die Transportelemente 21a, 21 b übertragen wird. Die Transportelemente 21a, 21 b werden daher auch während der Drehbewegung zuverlässig am Gestell 31 gehalten, wobei gleichzeitig eine hohe Drehgeschwindigkeit der Haltevorrichtung 20 erreicht werden kann. Zudem ist es vorteilhaft, dass im Gegensatz zu einem einseitigen Drehantrieb 32 die erfindungsgemäße Drehvorrichtung 30 stabiler und dennoch leichter ausgebildet werden kann.

Die Merkmale der beschriebenen Ausführungsbeispiele der Erfindung in den Figuren 2 bis 6 und 8 können miteinander kombiniert werden, wobei es denkbar ist, dass die Vorrichtung 10 der Figur 8 mit einem Transportantrieb 22 ausgeführt werden kann, wie er in den Figuren 2 bis 5 gezeigt ist, und umgekehrt. Der Transportantrieb 22 kann dabei für jedes Transportelement 21 a, 21 b eine eigene Antriebseinheit 22a, 22b aufweisen. Außerdem ist es denkbar, dass anstelle von einer Rollenbahn der Figur 6 eine Förderbahn eingesetzt werden kann. Alternativ zur Ausführungsform der Figur 8 kann der Drehantrieb 32 für jede Drehscheibe 31 a, 31 b eine eigene Antriebseinheit aufweisen.

### Bezugszeichenliste

- 10: Vorrichtung
- 11: Transportrichtung
- 12: Drehachse
- 13: Klemmrichtung

- 20: Haltevorrichtung
- 21a, 21b: Transportelemente
- 22: Transportantrieb
- 22a, 22b: Antriebseinheit
- 24: Verstellmechanismus
- 25a, 25b: Gleitelemente

- 30: Drehvorrichtung
- 31: Gestell
- 31a, 31b: Drehscheiben
- 32: Drehantrieb
- 33: Abstandshalter
- 34: Stoßdämpfer
- 35: Führungsschiene
- 36: Schleifring

- 40a, 40b: Befestigungselement
- 41, 42: Transportrollen
- 43: Verbindungsriemen

- 50: Motor
- 51a, 51b: Getriebeelemente
- 52: Drehwelle
- 53a, 53b: Übertragungselemente

- 60a, 60b: Antriebsmotor
- 61a, 61b: Antriebsrad
- 62a, 62b: Umlenkrad
- 63a, 63b: Übertragungsrad
- 64a, 64b: erster Antriebsriemen
- 65a, 65b: zweiter Antriebsriemen

## Patentansprüche

1. Vorrichtung (10) zum Wenden eines Gegenstandes, insbesondere eines Paketes aus gestapelten Säcken, mit
einer Haltevorrichtung (20) zum Aufnehmen, Wenden und Abgeben des Gegenstandes, die zwei Transportelemente (21a, 21 b) zum Befördern des Gegenstandes und zumindest einen Transportantrieb (22) zum Antreiben der Transportelemente (21 a, 21 b) aufweist,
und einer Drehvorrichtung (30) zum Drehen der Transportelemente (21a, 21b) um eine ortsfeste Drehachse (12), die ein drehbares Gestell (31) zum beidseitigen Befestigen der Transportelemente (21 a, 21 b) aufweist,
wobei die Transportelemente (21 a, 21 b) bewegbar am Gestell (31) befestigt sind, **dadurch gekennzeichnet, dass**
der Transportantrieb (22) drehfest am Gestell (31) befestigt ist.

2. Vorrichtung (10) nach Anspruch 1,
**dadurch gekennzeichnet,**
**dass** der Transportantrieb (22) für jedes Transportelement (21a, 21b) eine Antriebseinheit (22a, 22b) aufweist.

3. Vorrichtung (10) nach Anspruch 1 oder 2,
**dadurch gekennzeichnet,**
**dass** die Transportelemente (21a, 21 b) mit einem Verstellmechanismus (24) miteinander verbunden und/oder in eine Klemmrichtung (13) aufeinander bewegbar sind, um den Gegenstand zum Wenden einzuklemmen.

4. Vorrichtung (10) nach einem der vorhergehenden Ansprüche,
**dadurch gekennzeichnet,**
**dass** der Verstellmechanismus (24) einen Pneumatikzylinder aufweist, wobei insbesondere der Pneumatikzylinder Schnellentlüftungsventile aufweist.

5. Vorrichtung (10) nach einem der vorhergehenden Ansprüche,
**dadurch gekennzeichnet,**
**dass** die Drehvorrichtung (30) einen Stoßdämpfer (34) aufweist, um die Bewegung der Transportelemente (21 a, 21 b) aufeinander zu dämpfen, und dass insbesondere der Stoßdämpfer (34) drehfest am Gestell (31) befestigt ist.

6. Vorrichtung (10) nach einem der vorhergehenden Ansprüche,
**dadurch gekennzeichnet,**
**dass** die Transportelemente (21 a, 21 b) in Form einer Rollenbahn ausgebildet sind, wobei insbesondere das Transportelement (21 a, 21 b) mindestens zwei Transportrollen (41, 42) aufweist, die mittels eines Verbindungsriemens (43), insbesondere eines Flach-, Zahn- oder Keilrippenriemens miteinander in Wirkverbindung stehen.

7. Vorrichtung (10) nach Anspruch 6,
**dadurch gekennzeichnet,**
**dass** die Transportelemente (21a, 21b) beidseitig Befestigungselemente (40a, 40b) aufweisen, die die Transportrollen (41, 42) umschließen und zum Befestigen der Transportelemente (21 a, 21 b) am Gestell (31) dienen.

8. Vorrichtung (10) nach einem der vorhergehenden Ansprüche,
**dadurch gekennzeichnet,**
**dass** die Drehvorrichtung (30) einen Drehantrieb (32) aufweist, der einen Motor (50), insbesondere einen Trommelmotor umfasst.

9. Vorrichtung (10) nach einem der vorhergehenden Ansprüche,
**dadurch gekennzeichnet,**
**dass** das Gestell (31) zwei Drehscheiben (31 a, 31 b) aufweist, um die Transportelemente (21a, 21 b) beidseitig umzuschließen.

10. Vorrichtung (10) nach Anspruch 9,
**dadurch gekennzeichnet,**
**dass** jede Drehscheibe (31a, 31b) eine Führungsschiene (35) aufweist, die mit Gleitelementen (25a, 25b) zusammenwirkt, die beidseitig an den Transportelementen (21 a, 21 b) angeordnet sind.

11. Vorrichtung (10) nach einem der vorhergehenden Ansprüche,
**dadurch gekennzeichnet,**
**dass** die Antriebseinheit (22a, 22b) ein Antriebsrad (61a, 61b), das durch einen Antriebsmotor (60a, 60b) antreibbar ist, und ein Umlenkrad (62a, 62b) aufweist, um die Wirkung des Antriebsmotors (60a, 60b) auf das Transportelement (21a, 21b) mittels eines Übertragungsrades (63a, 63b) zu übertragen, und dass insbesondere die Antriebseinheit (22a, 22b) gelenkig ausgebildet ist.

12. Vorrichtung (10) nach Anspruch 11,
**dadurch gekennzeichnet,**
**dass** das Antriebsrad (61 a, 61 b) drehfest am Gestell (31) befestigt ist, wobei das Übertragungsrad (63a, 63b) am Transportelement (21a, 21 b) befestigt ist und mit dem Transportelement (21a, 21b) bewegbar ist, und wobei das Umlenkrad (62a, 62b) zumindest zum Teil mit dem Transportelement (21a, 21 b) mitbewegbar ist.

13. Vorrichtung (10) nach einem der Ansprüche 11 oder 12,
**dadurch gekennzeichnet,**
**dass** das Übertragungsrad (63a, 63b) ein Teil des Transportelementes (21a, 21b), insbesondere eine Transportrolle (41, 42) ist.

14. Vorrichtung (10) nach einem der Ansprüche 11 bis 13,
**dadurch gekennzeichnet,**
**dass** das Antriebsrad (61 a, 61 b) mittels eines ersten Antriebsriemens (64a, 64b) mit dem Umlenkrad (62a, 62b) und/oder das Umlenkrad (62a, 62b) mittels eines zweiten Antriebsriemens (65a, 65b) mit dem Übertragungsrad (62a, 62b) in Wirkverbindung stehen, wobei insbesondere der erste und/oder der zweite Antriebsriemen (64a, 64b, 65a, 65b) in Form eines Flach-, Zahn- oder Keilrippenriemens ausgebildet ist.

15. Vorrichtung (10) nach einem der vorhergehenden Ansprüche,
**dadurch gekennzeichnet,**
**dass** ein Schleifring (36) an der Drehachse (12) vorgesehen ist, um den Transportantrieb (22), insbesondere den Antriebsmotor (60a, 60b) mit Energie zu versorgen.

16. Vorrichtung (10) nach einem der Ansprüche 8 bis 15,
**dadurch gekennzeichnet,**
**dass** der Drehantrieb (32) das Gestell (31) beidseitig antreibt, wobei insbesondere der Drehantrieb (32) zwei Getriebeelemente (51a, 51 b) aufweist, die um eine Drehwelle (52) drehbar sind, um beide Drehscheiben (31 a, 31 b) anzutreiben.

17. Vorrichtung (10) nach Anspruch 16,
**dadurch gekennzeichnet,**
**dass** der Drehantrieb (32) zwei Übertragungselemente (53a, 53b), insbesondere zwei Flach-, Zahn- oder Keilrippenriemen aufweist, um die Wirkung der Getriebeelemente (51a, 51 b) auf die Drehscheiben (31 a, 31 b) zu übertragen.

## Claims

1. A device (10) for turning over a package of stacked sacks, comprising: a holder device (20) for the purpose of receiving, turning over, and releasing the package, said holder device comprising two transport elements (21 a, 21 b) for the purpose of conveying the package, and comprising at least one transport drive (22) for the purpose of driving the transport elements (21a, 21 b) and having a rotary device (30) for the purpose of rotating the transport elements (21a, 21 b) about a stationary axis of rotation (12), said rotary device comprising a rotatable frame (31) to fasten the transport elements (21 a, 21 b) on both sides thereof, wherein the transport elements (21a, 21 b) are fastened to the frame (31) in a manner allowing movement,
**characterized in that**
the transport drive (22) is rigidly fastened to the frame (31) in a manner allowing movement.

2. A device (10) according to claim 1,
wherein the transport drive (22) has one drive device (22a, 22b) for each transport element (21 a, 21 b).

3. A device (10) according to claim 1 or 2, wherein the transport elements (21 a, 21 b) are connected to each other by means of an adjustment mechanism (24), and/or are able to move toward each other in a gripping direction (13) in order to grip the package for the purpose of turning it.

4. A device (10) according to one of the preceding claims,
wherein the adjustment mechanism (24) has a pneumatic cylinder and the pneumatic cylinder has quick ventilation valves.

5. A device (10) according to one of the preceding claims,
wherein the rotary device (30) comprises of a buffer (34) to absorb the movement of the transport elements (21 a, 21 b) toward each other, and that especially the buffer (34) is fixed rigidly to the frame (31).

6. A device (10) according to one of the preceding claims, wherein the transport elements (21 a, 21 b) are designed in the form of a roller track, wherein the transport element (21a, 21b) has at least two transport rollers (41, 42) which are functionally connected to each other by means of a connector belt (43) comprising a flat, toothed or v-ribbed belt.

7. A device (10) according to claim 6, wherein the transport elements (21 a, 21 b) have fastener elements (40a, 40b) on both sides, and these clasp around the transport rollers (41, 42) and serve to fasten the transport elements (21 a, 21b) to the frame (31).

8. A device (10) according to one of the preceding claims, wherein the rotary device (30) has a rotary drive (32) which comprises a motor (50), especially an axial motor.

9. A device (10) according to one of the preceding claims, wherein the frame (31) has two rotary disks (31 a, 31 b) in order to clasp around the transport elements (21 a, 21 b) on both sides.

10. A device (10) according to claim 9, wherein each rotary disk (31a, 31b) has a guide rail (25a, 25b) which works together with glide elements (25a, 25b) which are arranged on the transport elements (21a, 21 b) on both sides thereof.

11. A device (10) according to one of the preceding claims, wherein the drive device (22a, 22b) comprises of a drive wheel (61 a, 61 b) driven by a drive motor (60a, 60b) and a deflector wheel (62a, 62b) to transmit the impact of the drive motor (60a, 60b) to the transport element (21 a, 21 b) by means of a transmission wheel (63a, 63b), and that especially the drive device (22a, 22b) is designed flexible.

12. A device (10) according to claim 11, wherein the drive wheel (61a, 61b) is rigidly fastened to the frame (31), wherein the transmission wheel (63a, 63b) is fastened to the transport element (21 a, 21 b) and is able to move with the transport element (21a, 21 b), and wherein the deflector wheel (62a, 62b) can move at least partially together with the transport element.

13. A device (10) according to one of the claims 11 or 12, wherein the transmission wheel (63a, 63b) is a part of the transport element (21a, 21 b), especially a transport roller (41, 42).

14. A device (10) according to one of the claims 11 to 13, wherein the drive wheel (61a, 61 b) has a functional connection to the deflector wheel (62a, 62b) by means of a first drive belt (64a, 64b), and/or the deflector wheel (62a, 62b) has a functional connection to the transmission wheel (63a, 63b) by means of a second drive belt (65a, 65b), wherein the first and/or the second drive belts (64a, 64b, 65a, 65b) are designed in the form of a flat, toothed or v-ribbed belt.

15. A device (10) according to one of the preceding claims, wherein an abrasive ring (36) is included on the axis of rotation (12), in order to supply energy to the transport drive (22), especially to the drive motor (60a, 60b).

16. A device (10) according to one of the claims 8 to 15, wherein the rotary drive (32) drives the frame (31) on both sides, wherein especially the rotary drive (32) has two gear elements (51 a, 51 b) which can rotate about a rotary shaft (52) in order to drive both rotary disks (31a, 31 b).

17. A device (10) according to claim 16, wherein the rotary drive (32) has two transmission elements (53a, 53b), comprising two flat, toothed or v-ribbed belts, in order to transmit the action of the gear elements (51 a, 51 b) to the rotary disks (31 a, 31 b).

## Revendications

1. Dispositif (10) pour retourner un objet, notamment un paquet composé de sacs empilés, comprenant un dispositif de maintien (20) destiné à accueillir, retourner et délivrer l'objet, lequel possède au moins deux éléments de transport (21a, 21b) servant à transporter l'objet et au moins un mécanisme d'entraînement de transport (22) destiné à entraîner les éléments de transport (21a, 21b),
et un dispositif de rotation (30) destiné à faire tourner les éléments de transport (21a, 21b) autour d'un axe de rotation (12) en position fixe, lequel possède un bâti rotatif (31) servant à la fixation bilatérale des éléments de transport (21a, 21b),
les éléments de transport (21a, 21b) étant fixés de manière mobile au bâti (31),
**caractérisé en ce que** le mécanisme d'entraînement de transport (22) est fixé solidaire en rotation au bâti (31).

2. Dispositif (10) selon la revendication 1, **caractérisé en ce que** le mécanisme d'entraînement de transport (22) possède une unité d'entraînement (22a, 22b) pour chaque élément de transport (21a, 21b).

3. Dispositif (10) selon la revendication 1 ou 2, **caractérisé en ce que** les éléments de transport (21a, 21b) sont reliés ensemble par un mécanisme de positionnement (24) et/ou peuvent être déplacés l'un sur l'autre dans une direction de serrage (13) afin de serrer l'objet en vue de son retournement.

4. Dispositif (10) selon l'une des revendications précédentes, **caractérisé en ce que** le mécanisme de positionnement (24) possède un vérin pneumatique, le vérin pneumatique possédant notamment des soupapes de purge d'air rapide.

5. Dispositif (10) selon l'une des revendications précédentes, **caractérisé en ce que** le dispositif de rotation (30) possède un amortisseur de chocs (34) afin d'amortir le mouvement des éléments de transport (21a, 21b) l'un sur l'autre, et **en ce que** l'amortisseur de chocs (34) est notamment fixé solidaire en rotation au bâti (31).

6. Dispositif (10) selon l'une des revendications précédentes, **caractérisé en ce que** les éléments de transport (21a, 21b) sont réalisés sous la forme d'un convoyeur à rouleaux, l'élément de transport (21a, 21b) possédant notamment au moins deux rouleaux de transport (41, 42) qui se trouvent en liaison active l'un avec l'autre par l'intermédiaire d'une courroie de liaison (43), notamment une courroie plate, crantée ou trapézoïdale à nervures.

7. Dispositif (10) selon la revendication 6, **caractérisé en ce que** les éléments de transport (21a, 21b) possèdent des deux côtés des éléments de fixation (40a, 40b) qui entourent les rouleaux de transport (41, 42) et servant à la fixation des éléments de transport (21a, 21b) au bâti (31).

8. Dispositif (10) selon l'une des revendications précédentes, **caractérisé en ce que** le dispositif de rotation (30) possède un mécanisme d'entraînement rotatif (32) qui comprend un moteur (50), notamment un moteur à tambour.

9. Dispositif (10) selon l'une des revendications précédentes, **caractérisé en ce que** le bâti (31) possède deux plateaux tournants (31a, 31b) pour entourer les éléments de transport (21a, 21b) des deux côtés.

10. Dispositif (10) selon la revendication 9, **caractérisé en ce que** chaque plateau tournant (31a, 31b) possède un rail de guidage (35) qui coopère avec des éléments glissants (25a, 25b) qui sont disposés des deux côtés des éléments de transport (21a, 21b).

11. Dispositif (10) selon l'une des revendications précédentes, **caractérisé en ce que** l'unité d'entraînement (22a, 22b) possède une roue d'entraînement (61a, 61b) qui peut être entraînée par un moteur d'entraînement (60a, 60b) et une roue de renvoi (62a, 62b) pour transmettre l'action du moteur d'entraînement (60a, 60b) sur l'élément de transport (21a, 21b) par l'intermédiaire d'une roue de transmission (63a, 63b), et **en ce que** l'unité d'entraînement (22a, 22b) est notamment de configuration articulée.

12. Dispositif (10) selon la revendication 11, **caractérisé en ce que** la roue d'entraînement (61a, 61b) est fixée solidaire en rotation au bâti (31), la roue de transmission (63a, 63b) étant fixée à l'élément de transport (21a, 21b) et pouvant être déplacée avec l'élément de transport (21a, 21b), et la roue de renvoi (62a, 62b) pouvant être déplacée au moins en partie avec l'élément de transport (21a, 21b).

13. Dispositif (10) selon l'une des revendications 11 ou 12, **caractérisé en ce que** la roue de transmission (63a, 63b) est une partie de l'élément de transport (21a, 21b), notamment un rouleau de transport (41, 42).

14. Dispositif (10) selon l'une des revendications 11 à 13, **caractérisé en ce que** la roue d'entraînement (61a, 61b) se trouve en liaison active avec la roue de renvoi (62a, 62b) par l'intermédiaire d'une première courroie d'entraînement (64a, 64b) et/ou la roue de renvoi (62a, 62b) avec la roue de transmission (62a, 62b) par l'intermédiaire d'une deuxième courroie d'entraînement (65a, 65b), la première et/ou la deuxième courroie d'entraînement (64a, 64b, 65a, 65b) étant notamment réalisée (s) sous la forme d'une courroie plate, crantée ou trapézoïdale à nervures.

15. Dispositif (10) selon l'une des revendications précédentes, **caractérisé en ce qu'**un anneau glissant (36) est monté sur l'axe de rotation (12) pour alimenter le mécanisme d'entraînement de transport (22), notamment le moteur d'entraînement (60a, 60b), en énergie.

16. Dispositif (10) selon l'une des revendications 8 à 15, **caractérisé en ce que** le mécanisme d'entraînement rotatif (32) entraîne le bâti (31) des deux côtés, le mécanisme d'entraînement rotatif (32) possédant notamment deux éléments à engrenage (51a, 51b) qui peuvent tourner autour d'un arbre de rotation (52) afin d'entraîner les deux plateaux tournants (31a, 31b).

17. Dispositif (10) selon la revendication 16, **caractérisé en ce que** le mécanisme d'entraînement rotatif (32) possède deux éléments de transmission (53a, 53b), notamment deux courroies plates, crantées ou trapézoïdales à nervures, afin de transmettre l'action des éléments à engrenage (51a, 51b) aux plateaux tournants (31a, 31b).
